# EUROPEAN PATENT APPLICATION

(11) **EP 2 541 532 A1**
(43) Date of publication of application: **02.01.2013**
(21) Application number: 11171725.2
(22) Date of filing: 28.06.2011
(51) Int. Cl.: G09B 19/00, G09B 19/24, G09B 5/06, G09B 23/28

(54) **A training device for an auto-injector**

(71) Applicant: Alk AG, 8604 Volketswil (CH)
(72) Inventor: Groves, Bryce Vernon, London SW15 1 QG (GB); Yeates, Henry Samuel, Berkshire RG7 1BZ (GB); Coady, Gareth Michael, Wick Vale of Glamorgan (GB)
(74) Representative: Inspicos A/S

(57) **Abstract**

The invention provides a hendheld device for training a user in operating an auto-injector. The device has a screen and a sensor which can quantify a physical activity of the device. A visual representation of the auto-injector and a visual instruction for a desired use of the auto-injector is presented on the screen while the user is requested to manipulate the handheld device as if it was the auto-injector. By use of the sensor date, the device evaluates the performance of the user and provides a level of compliance with the instructions. Accordingly, the invention provides an increased safety in use of auto-injectors e.g. for epinephrine (adrenaline).

## Description

### INTRODUCTION

The present invention relates to a device for training a user in operating an auto-injector, e.g. an epinephrine auto-injector. The invention further relates to a computer program particularly for a mobile phone, a medium comprising the computer program, and a method for training use of an auto-injector,

### BACKGROUND

An auto-injector is a medical device used to deliver a measured dose of a drug, e.g. epinephrine also known as adrenaline. Epinephrine is most frequently used for the treatment of acute allergic reactions to avoid or treat the onset of anaphylactic shock.

Typically, an auto-injector contains a spring-loaded needle that exits the tip of the device and into the recipient's body to deliver the medication. The device contains a pre-determined dose of the drug in question.

Typically, the device is held with its tip tightly against the leg and the device is activated by a push against the leg, or activated in a ballpoint pen-fashion. After activation, the user holds the device in place e.g. for 10 seconds as the epinephrine is delivered. This gives the drug sufficient time to be absorbed by the body's muscles and diffused into the bloodstream. In most countries, epinephrine is a prescription drug, and therefore obtaining the device requires a prescription from a doctor. In a similar manner, training in correct use of the device is important.

The epinephrine auto-injector can be seen as insurance against a very rare incident - hopefully the patient will never have to use the auto-injector at all, and the auto-injector will be carried along just for the very rare occasion where treatment of anaphylactic shock is required. Accordingly, the user is most likely never becoming an experienced user of the epinephrine auto-injector.

Typically, makers of epinephrine auto-injectors provide simulation auto-injectors which function exactly as a real auto-injector, however without including epinephrine, and needle, and which is resetable for repeated use. This enables frequent use of the simulation auto-injector and thereby enables the user to become experienced even though the real auto-injector is never or only rarely being used,

Since correct use involves parameters which are difficult to estimate, e.g. correct orientation of the auto-injector and correct timing, it is often difficult for the user to judge when sufficient skills for safe use is achieved and the simulation auto-injector does not provide guidance beyond that provided by a written instruction for use.

The existing simulation auto-injectors take up space and they are unpleasant to carry along. Accordingly, it is typically only the patient who trains with the simulation device, and typically only when being at home. This is not always desirable since some patients experience sudden and unexpected attacks and therefore rely on help from others with regards to use of the auto-injector.

### DESCRIPTION OF THE INVENTION

It is an object of embodiments of the invention to provide improved training for correct use of auto-injectors,

It is a further object of embodiments of the invention to provide a training device which can be carried along and which can easily and with no costs be distributed to a large amount of people, e.g. acquaintances of the patient.

It is a further object of embodiments of the invention to increase the educational level of the public, not only patients, and particular to increase the knowledge regarding auto-injectors and correct use thereof - particularly with regards to epinephrine auto-injectors and similar auto-injectors for which a patient may rely on help from others.

Accordingly, the invention, in a first aspect, provides a handheld computer device comprising a screen and a sensor which can quantify a physical activity of the device, where the device is adapted, on the screen, to provide a visual representation of the auto-injector and a visual instruction for a desired use of the auto-injector. The instructions comprise a request for the user to manipulate the device itself as if it was the auto-injector and the device is adapted to evaluate data from the sensor and provides a level of compliance with the instructions.

Since the training includes not only visual instructions for correct use but also evaluation of sensor data and a degree of compliance with the instructions, the user can judge when sufficient skills for safe usage of an auto-injector is achieved.

Since the training device is implemented as a handheld computer device with a screen and a sensor which can quantify a physical activity, the training device can be implemented on a very large amount of existing electronic devices already being used by a variety of people, examples include mobile phone devices, electronic game controllers, path finders or GPS trackers etc. Accordingly, the invention enables training by many people, patient or non-patients, and irrespective of the background. Particularly, the mentioned hand held devices are easy to bring along and they often have a size which is suitable for simulating the activity of an auto-injector. Particularly mobile phones are typically always ready at hand which is a great advantage. The use of mobile phone with appropriate computer programs to constitute the device according to this invention enables frequent training sessions and it enables sharing of the training between groups of people whenever time is available. In social events, whenever sitting in a group, one person may use the mobile phone to educate the others in correct use of an auto-injector, and everyone may in an easy and amusing way get acquainted with a risk e.g. of anaphylactic shock and the corresponding treatment.

Since the training device includes interaction between the user regarding compliance with a physical activity, training in use of a drug substance becomes easy and for many people it may even become amusing to train the use of an auto-injector. Accordingly, the invention may bring knowledge about auto-injectors and correct use thereof to a wide group of people including those not having the need for treatment themselves.

By *"handheld"* it is herein defined that the device is self powered, i.e. powered by battery, solar cells or an any similar manner independent on power from a fixed grid. It is also defined that the device is of a size and shape which enables manipulation by hand as a substitute for a real auto-injector. Particularly, an auto-injector has a weight between 20 and 200 grams and it is desirable for the device has a weight within a similar range, or within a range of 100-400 grams, such as 150-300 grams, such as 180-250 grams such as 200- 220 grams, which is also acceptable for providing the feeling of manipulating the real auto-injector.

By "computer device" is herein defined any kind of device which includes the claimed features. It could be constituted by, or form part of a standard device which are originally made for general computer purpose, or it may be constituted by or form part of mobile phone devices, game controllers, sport computers e.g. for navigation, biking, or running.

Particularly, such standard electronic devices may include accelerometers, gyros, timers, or other sensors which could advantageously constitute the sensor according to the invention. These sensors could be build into the device or they could be external to the device. Furthermore, the Iphone™, the Ipod Touch™ and other devices may have a connector in which a pressure sensor can be connected to further enhance the application according to this invention by providing compliance monitoring for finding the correct orientation and further for finding that physical activity or point in time when the device is pressed against the thigh. Identification of this activity starts a period of e.g. 1-20 seconds, such as 2-12 seconds, such as 3-10 seconds, such as 4-8 seconds, in which the device should be held relatively still.

The screen could be a regular screen of the kind well known from small electronic devices including mobile phones. The interaction could be established by use of push buttons, movement sensors etc. In one embodiment, however, an important part of the user interaction is established via a touch screen, preferably of a size allowing display of the auto injector in an at least close to 1:1 size or at least between 1:1 and 1:4 of the real size. I.e. if the auto-injector has a length of e.g. 16 cm, it is desirable if the screen has a length between 4 and 16 cm, e,g. between 6 and 8 cm. long. The width may e.g. be between 4 and 7 cm.

By "*physical activity"* is herein defined an activity which is carried out by the user on the device, e,g. an activity of touching the screen or an activity of shaking or moving the device.

The sensor which can quantify a physical activity may comprise any number of sensors build into the device. As already mentioned, the screen could be a touch screen and the screen thereby forms part of the sensor. Additionally, the device may have a sensor capable of determining movement of the device or capable of determining a position or orientation of the device. This sensor could e.g. comprise an acceleration sensor, e.g. a 3 axis acceleration sensor capable of providing acceleration in three distinct directions, e.g. in x-y-z direction with 90 degrees between each direction.

The sensor may also comprise a gyro or any similar kind of sensor which can determine orientation.

Additionally, the sensor may comprise an electronic circuit capable of handling data from the sensors to identify a specific physical activity carried out on the device, e.g. to provide a signal when movement of the device in a specific direction is stopped, i.e. to provide gesture recognition. This could e.g. be used for indication of when the user has pressed the device against the thigh, which gesture with the real auto-injector would typically release the needle and cause injection of the epinephrine or similar drug.

The circuit may also provide a signal when the device is in an upright orientation. This could indicate when the user holds the device in a correct orientation ready to be pushed firmly against the thigh.

The visual representation of the auto-injector may be actively adaptable to a specific step in the use of the auto-injector. As an example, the user may be requested to unwrap the auto-injector, and the screen may visualise the auto-injector in a state where it is wrapped in until an activity is carried out, and in an un-wrapped state as soon as the activity is acknowledged. Likewise, the auto-injector may have a cap which can be pulled off, and the screen may visualise the auto-injector a state with the cap and in a state without the cap. The auto-injector also typically has a state with the needle being retracted and a state with the needle projecting from the tip. Again, the visual representation may include both states.

The request for the user to manipulate the device itself as if it was the auto-injector may be provided in writing on the screen or orally by use of a speaker. The request may be followed by audio signals, e.g. one signal representing successful compliance with the instructions and one signal representing a failure to comply with the instructions,

The device comprises an electronic circuit adapted to evaluate data from the sensor and based thereon, to provide a level of compliance with the instructions. This may include checking of the orientation of the device is acceptable, checking if the time during which the device is pressed against the thigh is acceptable etc. It may also include checking if the training session is repeated with a certain frequency or checking if it is repeated in case of failure.

In one embodiment, the sensor is adapted to determine an orientation of the device relative to horizontal. If it is desirable for the needle to penetrate the muscle with a specific angle relative to the muscle, the instructions may relate to an orientation of the auto-injector relative to an orientation of the user, e.g. by specifying that the user should hold the leg in a certain angle relative to horizontal or vertical, and by subsequent checking of the actual angle of the device relative to horizontal or vertical.

Particularly, it may be desirable to carry out the evaluation of data from the sensor while the instructions are provided on the screen. This may enable the user more quickly to learn how to adjust the behaviour to the desired behaviour e.g. with regards to finding a correct angle of the device etc. Accordingly, the device may be adapted to iteratively provide instructions and obtain sensor measurements for subsequent adjustment of the instructions based on the measurements etc. As an example, the device may repeatedly state that the device should be held further upright until the sensor registers an angle of the device being within an acceptable range.

In one embodiment, the device and the instructions are particularly adapted for desired use of an epinephrine auto-injector. This specific use will be explained in further details with reference to the specific embodiment and the drawings.

In addition to the instructions and simulation of use of an auto-injector, the device may include other functions related to the use of the auto injector. In case of an epinephrine auto-injector, the device may further be adapted to represent anaphylaxis graphically on the screen. This may e.g. include visual representation of BP, Heart Rate, Peak Flow, Skin Colour or other physiological responses to anaphylaxis. The device may e.g. utilise sensors for finding an actual physical state of a patient, e.g. a heart rate, or the device may contain an information sequence with general information about the physiological responses which should be kept in mind. General information could be valuable not least for the patient to share with colleagues, friends and relatives such that those people typically being around the patient knows what to look for.

As already mentioned, the epinephrine auto-injector is hopefully never going to be used and most patients will never become experienced in use of the real auto-injector, Moreover, auto-injectors with epinephrine must be replaced frequently, typically every second year, due to degradation of the medical substance in the auto-injector. Accordingly, new models of the real auto-injector with new features etc may be introduced. To improve the ability of the user to repeatedly update the training device and to improve the ability of the user to frequently use the training device, the device may form part of a mobile telephone device such as an lphone™ or an Android™ phone device. In this case, the mentioned electronic circuits and sensors form part of the integrated devices in such phones, and the functions apply by use of adequate software loaded into the memory of the phone device in question.

To ensure correct match between the training which is carried out and the real auto-injector, the device may be adapted to read an identification insignia obtained on the real auto-injector, and to adapt the instructions and the auto-injector visualisation to that auto-injector being identified by the insignia. The identification insignia could include a bar code or any similar code which can be read by the device automatically. The identification insignia may further include information regarding the lifetime of the real auto-injector such that the training device can alert the user when the real auto-injector must be replaced with a new one.

When the user replaces a real auto-injector with a new auto-injector, the identification insignia is entered into the device, and the device may now be adapted automatically to alert the user should the new real auto-injector work in a different manner or otherwise require changes to the operation procedure.

The invention, in a second aspect, provides a computer program product readable by a handheld computer device and comprising a set of instructions for the device to provide instructions on a screen of a device for use of an auto-injector, the instructions comprising representing the auto-injector visually on the screen and a request for the user to manipulate the device itself as if it was the auto-injector, the computer program may further comprise code for carrying out the steps of evaluating sensor data which indicates a physical activity of the device and the step of providing a level of compliance with the instructions.

The invention further provides a computer-readable medium comprising said computer program. This enables easy distribution of the program to a wide group of people, e.g. via upload from well known providers of applications for handheld computer devices such as mobile phones or game controllers. The computer-readable medium may include a USB dongle with an EPROM chip with the software such that the invention can be adapted in any electronic device capable of reading such a dongle.

In a further aspect, the invention provides a method for training use of an auto-injector, the method comprising the steps of providing instructions on a screen of a handheld computer device for use of the auto-injector, the instructions comprising representing the auto-injector visually on the screen and a request for the user to manipulate the device itself as if it was the auto-injector, the method further comprising the steps of evaluating sensor data which indicates a physical activity of the device and the step of providing a level of compliance with the instructions. Particularly, such a method is relevant with regards to epinephrine

### BRIEF DESCRIPTION OF THE DRAWINGS

The invention will now be described by way of example with reference to following figures in which:
Fig. 1 illustrates a device according to the invention;
Figs, 2-6 illustrate the device with different parts of the visual instruction for use on the screen; and
Figs. 7-8 illustrate further screens of a device according to the invention.

### DETAILED DESCRIPTION OF AN EMBODIMENT

Further scope of applicability of the present invention will become apparent from the following detailed description and specific examples. However, it should be understood that the detailed description and specific examples, while indicating preferred embodiments of the invention, are given by way of illustration only, since various changes and modifications within the scope of the invention will become apparent to those skilled in the art from this detailed description.

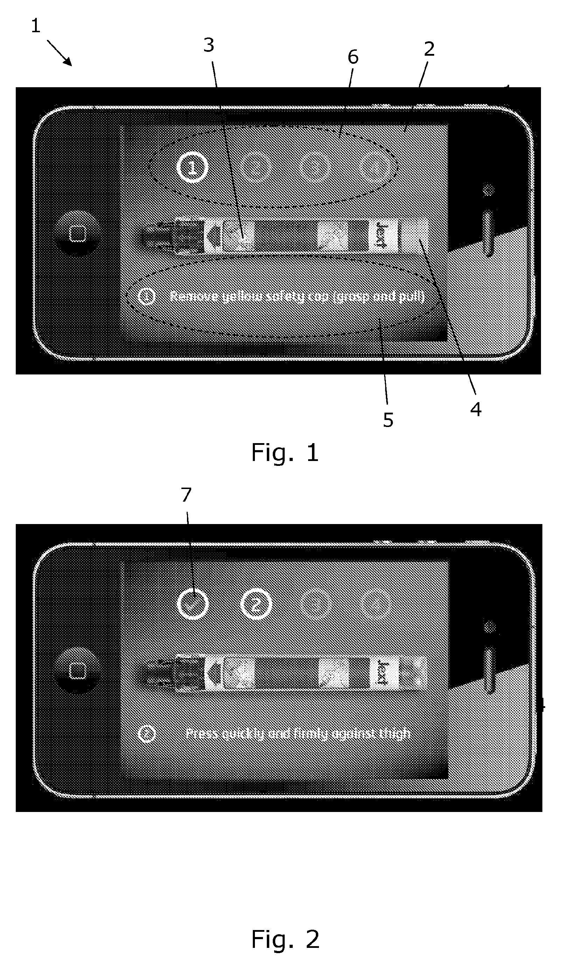

Fig. 1 illustrates a handheld device 1 for training a user in operating an auto-injector. The disclosed device is for training in use of an epinephrine auto-injector device and it comprises a screen 2 and three sensors which can quantify a physical activity of the device.

A first one of the sensors determines acceleration and may, with appropriate data processing determine movement of the device. Such data processing is well known in the art. As an alternative or in addition to the acceleration sensor, the first sensor may include a gyro. A second sensor can determine touch on the screen (touch-screen-sensor), and the third sensor is a clock which can determine duration of an activity, or duration of a lack of activity related to the other sensors.

As indicated in any one of Figs. 1-6, the screen provides a visual representation of the auto-injector 3. Additionally, the device provides instructions for the user on how to use and manipulate the auto-injector. These instructions include a request for the user to manipulate the device itself to simulate that the device is the auto-injector. These instructions may be provided visually on the screen or they may be provided audibly via a speaker.

The device evaluates data from the sensors and provides a level of compliance with the instructions.

In Fig. 1 which illustrates a first step of the instruction session, the user is requested to remove a safety cap 4 in the right side of the illustrated auto-injector 3. The instructions are provided in writing in an instruction field 5 on the screen 2 and the user is informed about which step in the instruction which is carried out in a step indicator 6.

The screen is touch sensible and the device registers when the user virtually pulls off the safety cap by touching the screen and sliding the fingers over the screen. The device acknowledges the procedure by use of an audible signal and by marking the first step done with a tag 7 in the step indicator, c.f. Fig. 2.

Fig. 2 illustrates a second step which is initialised by compliance with the first step. In the second step, the user is requested to press the device against the thigh as if the device was the auto-injector itself. The acceleration sensor, or any similar sensor capable of determining movement and/or orientation of the device, determines the angle of the device. In this particular application, the auto-injector is for epinephrine, and the angle of the needle during intrusion into the muscle should typically be between 0 and 90 degrees from vertical, preferably between 10 to 80 degrees from vertical, more preferably between 20 to 70 degrees from vertical, more preferably between 30 to 60 degrees from vertical, more preferably between 35 and 55 degrees from vertical, such as between 37 and 52 degrees from vertical, such as between 39 and 49 degrees from vertical, such as approximately 45 degrees from vertical. Additionally, the screen may provide additional guidance, e.g. relative to a desired angle relative to the thigh.

Fig, 3 illustrates a warning which is generated if the device is held in an angle outside the desired 0-90 degrees range from vertical. The warning includes also an acoustic signal.

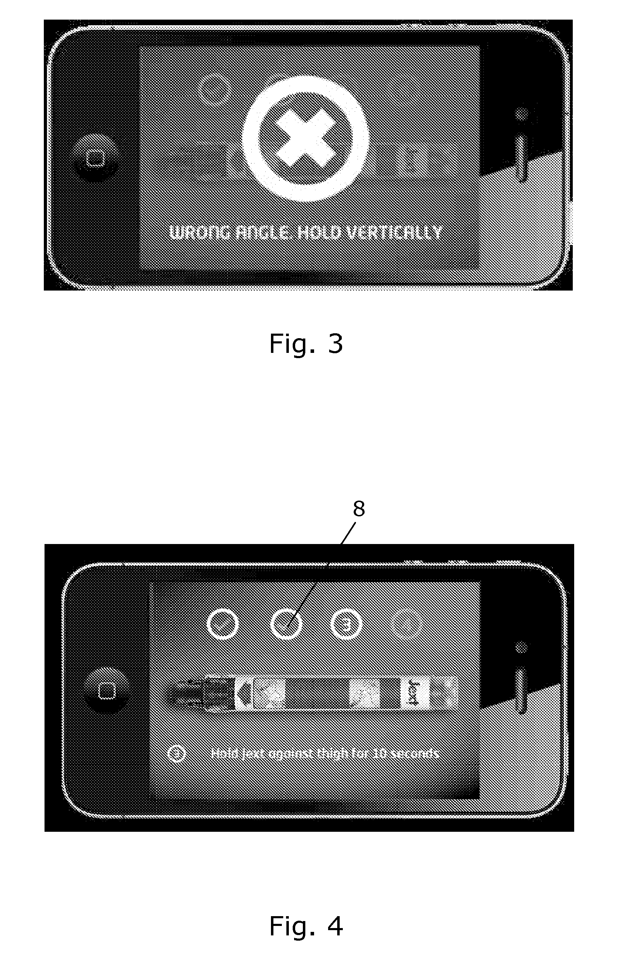

Fig. 4 illustrates the device when it has been acknowledged that the angle is correct, the acknowledgement includes an acoustic signal and a tag 8 in the step indicator 6.

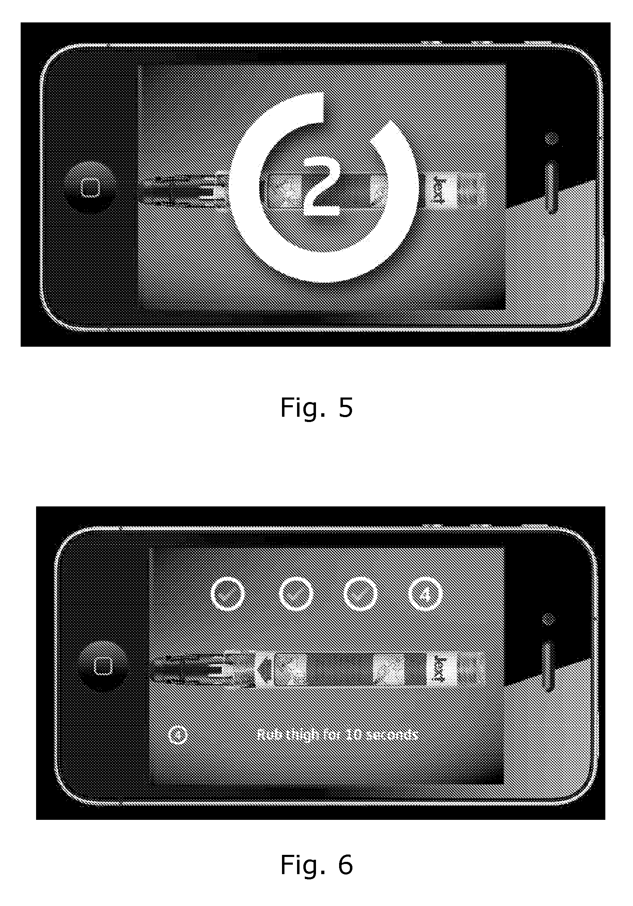

When the user pushes the device towards the thigh, the acceleration sensor can determine the deceleration and thereby register that the virtual needle is now inside the muscle, Fig. 5 illustrates the pen being pushed to the left side of the screen to indicate that the device has registered this step and now considers the needle being injected. The acknowledgment is followed also by the sound of a spring which is released. This simulates the sound of the spring in the real auto-injector which makes the needle spring forward into the muscle. The timer starts counting 10 seconds. In Fig. 5, two seconds have been counted, and when the 10 seconds are counted, the device acknowledges correct procedure by shifting to the screen shown in Fig. 6.

The device illustrated in Figs. 1-6 is an lphone™ telephone device. Mobile telephone devices are typically ready at hand, and advanced mobile telephones have build-in sensors of the kind described above. Accordingly, the user is capable of training correct use of the auto-injector whenever it is appropriate without having to carry an additional separate training device.

In the following, the features of the device are described in further details, When the cap is removed by movement of fingers across the touch-screen, a timer counts 3 seconds and during this period of time, the device evaluates the angle of the device relative to vertical or relative to a downwards direction determined by use of gravity. In an Iphone™ and in similar devices, the angle is typically subject to a deviation of plus/minus 10 degrees.

If the angle after 3 seconds is incorrect, the user is notified and requested to improve,

If the angle is correct, the device will use gesture recognition to identify when the device is pressed against the thigh. In one particular example, the device comprises three acceleration sensors for determining acceleration in three distinct directions, typically in X-Y-Z directions of a Cartesian coordinate system, i.e. with 90 degrees angle between each direction. Ipones™ Ipads™ and similar devices typically include such acceleration sensors. In development of programs for such devices, the programmer is offered three vectors each describing the acceleration in the different directions, i.e. the direction and size of the acceleration where the size is provided in form of the vector length.

To identify when the devices is pressed against the thigh, the gesture recognition may include at least one out of two distinct steps:
1. The step of the user holding the device against the thigh at the correct angle without moving the device, and
2. The step of the user moving the device into the thigh for simulating the step of releasing the needle from the tip of the auto-injector by pressing the tip against the thigh.

In the set of instructions, the user is requested to carry out both the gesture 1 and the gesture 2. Simultaneously, the device will search for the corresponding gestures by adequate data processing of data received from the acceleration sensors, gyros or similar sensors of the device.

In particular, the device may calculate a derivative vector from the three acceleration vectors.

Gesture step 1 can be identified by comparing the length of the derivative vector with a limit value to identify whenever the acceleration is below this limit value. When it is identified that the acceleration is below this limit value, the device may start a timer to identify when the acceleration has been below the limit value for a predetermined amount of time. When e.g. the acceleration has been below the limit value for more than 1 second, 2 seconds or more, the device may consider that gesture 1 is identified.

Since the movement of the device into the thigh implies firstly an increase in acceleration and subsequently a decrease in acceleration when the device is stopped by the pressure against the thigh, gesture step 2 can be identified by comparing the change in vector length with a limit value for delta vector length, i.e. by finding a change in acceleration being either above or below a predefined value. To improve finding gesture step 2, the device may only consider such change in acceleration provided that the acceleration is in a direction corresponding to the direction from the bottom towards the tip of the auto-injector which is displayed on the screen, i.e. only when the acceleration is in that direction in which the needle is to penetrate the skin. The angle is typically calculated relative to the angle of gravity.

Each one of the gesture steps 1 and 2 could be found independently. However, to improve the precision of the gesture recognition, the device may recognise both gesture 1 and 2 and only consider the needle being injected into the thigh in case gesture step 2 is identified directly after the recognition of gesture step 1.

At this point, the device starts a timer which should verify that the device is held without movement for a period of 10 seconds while the epinephrine is allowed to inject into the muscles. To verify that the device is at least essentially not moved, the device may use signals from any of the acceleration sensors, or the device may compare the length of the derivative vector with a limit value. In case that limit value is exceeded, the device may inform the user to hold the device longer time against the thigh to allow the epinephrine to enter the body.

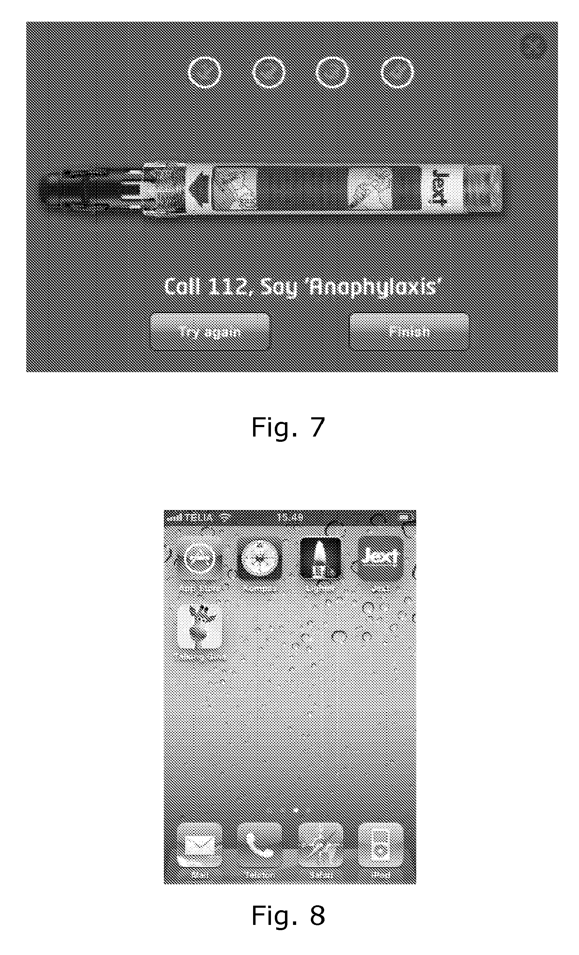

Fig. 7 illustrates a user interaction which could be triggered once the training session has been completed satisfactorily. In this screen, the user is encouraged to dial 112 and say "Anaphylaxis" which is a term which is generally known to medical practitioners and life-saving teams,

Fig. 8 illustrates that the device may be integrated in an I-phoneTM. In this case, the application-code named "JEXT" causes the Iphone to act as the device according to this invention.

## Claims

1. A handheld computer device for training a user in operating an auto-injector, the device comprising a screen and a sensor which can quantify a physical activity of the device, where the device is adapted, on the screen, to provide a visual representation of the auto-injector, the device further providing instruction for a desired use of the auto-injector, the instructions comprising a request for the user to manipulate the device itself as if it was the auto-injector, the device being further adapted to evaluate data from the sensor and provides a level of compliance with the instructions.

2. A device according to claim 1, wherein the sensor comprises a motion detector movement of the device.

3. A device according to claim 2, wherein the motion detector comprises a 3-axis acceleration sensor capable of providing acceleration in three distinct directions, and an electronic circuit capable of handling data from the sensors to identify a specific physical activity carried out on the device.

4. A device according to claim any of the preceding claims, wherein the sensor comprises a timer for determining duration of a physical state, position or orientation of the device.

5. A device according to any of the preceding claims, comprising gesture recognition based on data from the sensor.

6. A device according to any of the preceding claims, wherein the instructions relate to an orientation of the auto-injector relative to horizontal,

7. A device according to any of the preceding claims, wherein the instructions relate to an orientation of the auto-injector relative to an orientation of the user.

8. A device according to any of the preceding claims, further comprising an audio output for transmitting an audible signal representing a sound associated with use of the auto-injector.

9. A device according to any of the preceding claims, further comprising user input means integrated in the screen such that the user is capable of manipulating operation controls on the visual representation of the auto-injector.

10. A device according to any of the preceding claims, adapted to carry out the evaluation of data from the sensor while the instructions are provided on the screen.

11. A device according to any of the preceding claims, wherein the instructions is for desired use of an epinephrine auto-injector.

12. A device according to any of the preceding claims, wherein the screen is a touch screen and the device is adapted to detect movement of fingers over the visual representation to simulate an operation carried out on the represented auto-injector.

13. A device according to any of the preceding claims, further adapted to visualise physiological responses to anaphylaxis graphically on the screen.

14. A device according to any of the preceding claims, where the device forms part of a mobile telephone device.

15. A device according to any of the preceding claims, further adapted to read an identification insignia obtained on a real auto-injector, and to provide instructions and visual representation of that auto-injector being identified by the insignia.

16. A device according to claim 15, wherein the identification insignia includes information regarding the lifetime of the real auto-injector, the device being adapted to alert the user when the real auto-injector must be replaced with a new one.

17. A computer program product readable by a hand held computer device and comprising a set of instructions for the device to provide instructions on a screen of a device for use of the auto-injector, the instructions comprising representing the auto-injector visually on the screen and a request for the user to manipulate the device itself as if it was the auto-injector, the program further comprising instructions for the device to carry out the steps of evaluating sensor data which indicates a physical activity of the device and the step of providing a level of compliance with the instructions.

18. A computer-readable medium comprising the computer program according to claim 17 and being readable by a handheld computer device,

19. A method for training use of an epinephrine auto-injector, the method comprising the steps of providing instructions on a screen of a handheld device for use of the auto-injector, the instructions comprising representing the auto-injector visually on the screen and a request for the user to manipulate the device itself as if it was the auto-injector, the method further comprising the steps of evaluating sensor data which indicates a physical activity of the device and the step of providing a level of compliance with the instructions.
